# EUROPEAN PATENT SPECIFICATION

(11) **EP 2 098 568 B1**
(45) Date of publication and mention of the grant of the patent: **01.05.2013**
(21) Application number: 07832604.8
(22) Date of filing: 20.11.2007
(51) Int. Cl.: C08L 59/00, C08K 3/22, C08K 5/09, C08K 5/098, C08K 5/13, C08K 5/20, C08K 5/29, C08K 5/3477, C08K 5/39

(54) **POLYACETAL RESIN COMPOSITION AND MOLDED ARTICLE THEREOF**
POLYACETALHARZZUSAMMENSETZUNG UND FORMKÖRPER DARAUS
COMPOSITION DE RÉSINE DE POLYACÉTAL ET ARTICLE MOULÉ À PARTIR DE CELLE-CI

(30) Priority: 27.11.2006 JP 2006318033
(43) Date of publication of application: 09.09.2009
(73) Proprietor: Polyplastics Co., Ltd., Tokyo 108-8280 (JP)
(72) Inventor: HASE, Hiroyuki, Fuji-shi Shizuoka 416-8533 (JP)
(74) Representative: Peel, James Peter
(86) International application number: PCT/JP2007/072879
(87) International publication number: WO 2008/066053

(56) References cited:
- EP-A1- 1 522 554
- EP-A1- 2 067 821
- JP-A- 06 248 162
- JP-A- 06 274 854
- JP-A- 2001 011 143
- JP-A- 2005 112 995

## Description

### Technical field

The present invention relates to a polyacetal resin composition which has excellent processability and stability, significantly suppresses the amount of formaldehyde generated from a molded article thereof, and prevents bleeding of components from the molded article.

### Background Art

Polyacetal resins have excellent characteristics, and the molded articles thereof are used in a wide range of fields. Owing to the features of the chemical structure, polyacetal resins are easily decomposed in a heated oxidizing atmosphere and under an acidic or alkaline condition. Accordingly, the polyacetal resins have a task of retaining high thermal stability to suppress the generation of formaldehyde during the molding process and from the molded articles thereof. If the thermal stability is low, the polymer decomposes by heating during the processing stage such as extrusion and molding, which then produces adhesion materials to mold (mold deposit), and deteriorates moldability, mechanical properties, and the like. Furthermore, the formaldehyde generated by the decomposition of polyacetal resin is chemically active, thus the formaldehyde is converted into formic acid by oxidation, and adversely affects the heat resistance of the polyacetal resin, and when the polyacetal resin generating large amounts of formaldehyde is used in the parts of electrical and electronic equipment, or the like, the generated formaldehyde or the formic acid which is an oxide of the formaldehyde may provide factors of corroding the metallic contact parts and causes discoloration or contact failure by the adhesion of organic compounds. Although the amount of formaldehyde generated from the polyacetal resin molded article is very small under normal use conditions, the generated formaldehyde itself becomes a cause of the contamination of work environments in the parts-assembling process and of use environments of the final products.

Consequently, there are added an antioxidant and other stabilizers for stabilizing the polyacetal resin. There are known antioxidants added to the polyacetal resin, such as a sterically hindered phenol compound (hindered phenol), and a sterically hindered amine compound (hindered amine). Other known stabilizers include melamine, polyamide, alkali metal hydroxide, and alkali earth metal hydroxide. In addition, the antioxidant is normally used in combination with other stabilizers. However, sole blending of such a general-use stabilizer in the polyacetal resin having ordinary formaldehyde quality is difficult to significantly reduce the amount of generated formaldehyde, specifically formaldehyde generated from molded article.

To solve the above problems and to reduce the amount of formaldehyde generated, there are disclosed polyacetal resin compositions containing varieties of compounds.

For example, there are disclosed: a polyacetal resin composition containing a polyacetal resin and a glyoxy-diureido compound, (JP-A 10-182928 (Claim 1)); a polyacetal resin composition containing a polyacetal resin, and a cyclic nitrogen-containing compound (glycocyamidine such as creatinine, or a derivative thereof), (JP-A 11-335518 (Claim 1)); a polyacetal resin composition containing a polyacetal resin, at least one processing stabilizer selected from polyalkylene glycol, fatty acid ester, fatty acid amide, and fatty acid metal salt, and at least one suppressor selected from urea, a derivative thereof, and an amidine derivative, (JP-A 12-26704 (Claim 1)); a polyacetal resin composition containing a polyacetal resin, a hindered phenol-based compound, a spiro compound having triazine ring, and at least one of processing stabilizer and a heat-resistant stabilizer, (JP-A 2003-113289 (Claim 1)); and a polyacetal resin composition containing a polyacetal resin, and a guanamine derivative such as benzoguanamine as a stabilizer, (JP-A 62-190248).

In addition, JP-A 2005-112995 discloses a polyacetal resin composition composed of a polyacetal copolymer having a specific terminal group, and a formaldehyde inhibitor, with the disclosure of a guanamine compound, a urea-based compound, and a carboxylic acid hydrazide-based compound as the formaldehyde inhibitor.

### Disclosure of the Invention

According to the technologies disclosed in above JP-A 10-182928 (Claim 1), JP-A 11-335518 (Claim 1), JP-A 12-26704 (Claim 1), JP-A 2003-113289 (Claim 1), JP-A 62-190248, and JP-A 2005-112995, the generation of formaldehyde from polyacetal resin can be reduced. To significantly reduce the generation of formaldehyde, however, it is necessary to add blending components in a relatively large amount, which unavoidably raises problems of poor appearance and the like caused by bleeding of components from the obtained composition or from the molded article thereof. In particular, it is very difficult to obtain a resin material which suppresses bleeding of components under high temperature and high humidity conditions. In addition, as disclosed in JP-A 2005-112995, the use of a polyacetal copolymer having a specific terminal group tends to increase further the bleeding of components, though the use thereof is effective to reduce the generation of formaldehyde.

An object of the present invention is to provide a polyacetal resin composition which can suppress the generation of formaldehyde from a molded article thereof at an extremely low level, and suppresses the bleeding of components from the molded article.

To achieve the above object, the inventors of the present invention have conducted detail study to develop a polyacetal resin material which can suppress the generation of formaldehyde from the molded article thereof at an extremely low level, and suppresses the bleeding of components therefrom, and have found that the use of a polyacetal copolymer having specific terminal group characteristics as a base resin, with the combined use of an iso(thio)cyanate compound while selecting a stabilizer component to be added, produces unexpected effects of significantly reducing the generation of formaldehyde from the molded article thereof, and further significantly suppressing the bleeding of the components, thus having perfected the present invention.

That is, the present invention relates to a polyacetal resin composition which contains: 100 parts by weight of (A) a polyacetal copolymer containing 1.0 mmol/kg or less of hemiformal terminal group, 0.5 mmol/kg or less of formyl terminal group, and 0.5% by weight or less of unstable terminal group; 0.01 to 3 parts by weight of (B) a hindered phenol-based antioxidant; 0. 05 to 1 part by weight of (C) at least one compound of a guanamine compound and a triazine compound; and 0.01 to 1 part by weight of (D) a compound selected from an isocyanate compound, an isothiocyanate compound, and a modified compound thereof, and relates to a molded article of the polyacetal resin composition.

According to the present invention, there are provided a polyacetal resin composition having extremely reduced generation of formaldehyde and suppressing bleeding of components, and a molded article therof.

Specifically, the invention provides, in a first aspect, a polyacetal resin composition comprising:
100 parts by weight of (A) a polyacetal copolymer containing 1.0 mmol/kg or less of hemiformal terminal group, 0.5 mmol/kg or less of formyl terminal group, and 0.5% by weight or less of unstable terminal group;
0.01 to 3 parts by weight of (B) a hindered phenol-based antioxidant;
0.05 to 1 part by weight of (C) at least one compound selected from the group consisting of guanamine compounds and triazine compounds; and
0.01 to 1 part by weight of (D) a compound selected from the group consisting of an isocyanate compound, an isothiocyanate compound and a modified compound thereof;
wherein the amount of the unstable terminal group is determined as follows: one gram of polyacetal copolymer is placed in a pressure-resistant closed container together with 100 ml aqueous solution of 50% (by volume) methanol containing 0.5% by volume of ammonium hydroxide; the mixture is heated to 180°C for 45 minutes, and then is cooled; the container is opened, and the amount of formaldehyde decomposed and eluted in the solution is quantified thereby to express the amount as weight percent to the amount of polyacetal copolymer, which is the amount of the unstable terminal group;
and with the proviso that the composition does not comprise both 0.01 to 5 parts by weight of a weathering (light) stabilizer and 1 to 50 parts by weight of a core-shell polymer having a core of a rubbery polymer and a shell of a glassy polymer composed of a vinyl-based copolymer.

The invention also provides, in a second aspect, a polyacetal resin molded article, prepared by molding the composition according to the first aspect.

### Detailed Description of the Invention

The present invention is described in detail in the following.

### (A) Polyacetal copolymer

The present invention uses a polyacetal copolymer (A) having specific terminal characteristics as the base resin. A polyacetal copolymer is a resin having oxymethylene group (-OCH₂-) as a main component unit, and other comonomer units except the oxymethylene unit and is generally manufactured by copolymerization of formaldehyde or a cyclic oligomer of formaldehyde, as a main monomer, with a compound selected from a cyclic ether and a cyclic formal, as a comonomer. The obtained copolymer is normally stabilized against thermal decomposition by removing unstable terminal parts through hydrolysis.

Specifically, the main monomer commonly used is trioxane which is a cyclic trimer of formaldehyde. Trioxane is normally obtained by the reaction of aqueous solution of formaldehyde in the presence of an acidic catalyst, and is used by purifying through a method such as distillation. As described later, the trioxane used for the polymerization is preferably the one containing small amounts of impurities such as water, methanol, and formic acid as far as possible. Examples of the cyclic ether and cyclic formal as the comonomer are ethylene oxide, propylene oxide, butylene oxide, cyclohexene oxide, oxetane, tetrahydrofuran, trioxepane, 1,3-dioxan, 1,3-dioxolane, propylene glycol formal, diethylene glycol formal, triethylene glycol formal, 1,4-butanediol formal, 1,6-hexanediol formal, and the like. Furthermore, a compound which can form branched structure or crosslinked structure can be used as the comonomer (or termonomer), and that type of compound includes: alkyl or aryl glycidyl ethers such as methyl glycidyl ether, ethyl glycidyl ether, butyl glycidyl ether, 2-ethylhexyl glycidyl ether, or phenyl glycidyl ether; and diglycidyl ethers of alkylene glycol or polyalkylene glycol, such as ethylene glycol diglycidyl ether, triethylene glycol diglycidyl ether, or butanediol diglycidyl ether. These comonomers can be used alone or in combination of two or more of them.

The above polyacetal copolymer can be obtained normally by cationic polymerization through the addition of an adequate amount of molecular-weight adjustor and through the use of a cationic polymerization catalyst. Applicable molecular-weight adjustor, cationic polymerization catalyst, polymerization method, polymerization apparatus, deactivation of catalysts after polymerization, method for stabilizing terminals of crude polyacetal copolymer prepared by the polymerization, and the like are known in many literatures, and any of them can be used basically.

Although the molecular weight of the polyacetal copolymer used in the present invention is not specifically limited, the weight-average molecular weight is preferably within the range of about 10,000 to 400,000. The polyacetal copolymer preferably has the Melt Index (determined at 190°C under 2.16 kg of load, in accordance with ASTM-D1238), which is an index of flowability of the resin, within the range of 0.1 to 100 g/10 min, and more preferably 0.5 to 80 g/10 min.

The polyacetal copolymer (A) used in the present invention is required to have specific terminal characteristics as described above, and in concrete terms, it is essential to have the amount of hemiformal terminal group of 1.0 mmol/kg or less, the amount of formyl terminal group of 0.5 mmol/kg or less, and the amount of unstable terminal group of 0.5% by weight or less.

The hemiformal terminal group is represented by -OCH₂OH, and is also referred to as hydroxymethoxy group or hemiacetal terminal group. The formyl group is represented by -CHO. The amount of such hemiformal terminal group and formyl group can be determined by ¹H-NMR, and the detail determination method can be referred to in the method described in JP-A 2001-11143. The amount of unstable terminal group means the amount of a part, existing in the terminal portion of the polyacetal copolymer and being readily decomposed because of the instability against heat and base.

The amount of such unstable terminal group is determined as follows. One gram of polyacetal copolymer is placed in a pressure-resistant closed container together with 100 ml aqueous solution of 50% (by volume) methanol containing 0.5% by volume of ammonium hydroxide. The mixture is heated to 180°C for 45 minutes, and then is cooled. After that, the container is opened, and the amount of formaldehyde decomposed and eluted in the solution is quantified thereby to express the amount as weight percent to the amount of polyacetal copolymer, which is the amount of the unstable terminal group.

If the polyacetal copolymer (A) to be used does not have the above terminal characteristics, but has the characteristics of more than the upper limit, the polyacetal resin composition having sufficiently reduced generation of formaldehyde cannot be obtained, and further it becomes difficult to keep the amount of formaldehyde generated by the repeated heat-history at a low level.

In this regard, the polyacetal copolymer (A) used in the present invention preferably has the amount of hemiformal terminal group of 1.0 mmol/kg or less and more preferably 0.6 mmol/kg or less, the amount of formyl terminal group of 0.5 mmol/kg or less and more preferably 0.1 mmol/kg or less, and the amount of unstable terminal group of 0.5% by weight or less and more preferably 0.3% by weight or less. The lower limits of the amount of hemiformal terminal group, the amount of formyl terminal group, and the amount of unstable terminal group are not specifically limited.

The polyacetal copolymer (A) having the above-described specific terminal characteristics can be manufactured by reducing impurities in the monomer and the comonomer, by selecting the manufacturing process, by optimizing the manufacturing conditions, and the like.

Examples of the method for manufacturing the polyacetal copolymer (A) having the specific terminal characteristics satisfying the requirements of the present invention will be given below, but are not limited to these methods.

First, it is important to minimize active impurities which form unstable terminals in polymerization systems, specifically the impurities such as water, alcohol (such as methanol), or acid (such as formic acid) in the monomer and the comonomer. The total amount of these active impurities is preferably regulated to 1 × 10⁻²% by mole or less, and more preferably 5 x 10⁻³% by mole or less, to the amount of total monomers in the reaction systems. Excessive amount thereof is naturally not preferable to obtain the polyacetal polymer having a small amount of unstable terminal parts. In addition, the molecular weight of the polyacetal polymer can be adjusted by adding an arbitrary amount of a chain-transfer agent which does not form unstable terminals, such as linear, low-molecular-weight acetal having alkoxy groups at both terminals, such as methylal.

Second, the amount of catalyst used in the polymerization reactions is also an important requirement. When a catalyst composed of boron trifluoride or a coordinate compound thereof is used, the amount thereof is preferably within the range of 5 x 10⁻³ to 1 x 10⁻² % by mole to the total amount of monomer, and is specifically preferable within the range of 1 x 10⁻³ to 7 x 10⁻³% by mole. Limiting the amount of catalyst to that range is effective in preventing the formation of unstable terminal parts. Excessive amounts of catalyst make the adequate control of polymerization temperature difficult, and the decomposition reaction during the polymerization becomes predominant, which makes it difficult to obtain the polyacetal polymer having a small amount of unstable terminal parts satisfying the requirements of the present invention. On the other hand, an excessively small amount of catalyst is not preferable because the polymerization rate decreases and the polymerization yield decreases.

The amount and the type of comonomer significantly affect the thermal stability of the polyacetal polymer. The polyacetal polymer of the present invention is preferably the one prepared by the copolymerization of trioxane (a-1) with one or more of compound (a-2) selected from cyclic ether and cyclic formal, at a ratio of the former (a-1) to the latter (a-2) from 99.9/0.1 to 80.0/20.0 (by weight), and more preferably from 99.5/0.5 to 90.0/10.0 (by weight). The compound (a-2) selected from cyclic ether and cyclic formal is specifically preferably ethylene oxide, 1,3-dioxolan, 1,4-butanediol formal, and diethylene glycol formal.

Any of known polymerization methods are possible. From industrial point of view, however, a preferred one is the continuous bulk polymerization method in which solid powdered and massive polymer is obtained with the progress of polymerization using a liquid monomer, and the polymerization temperature is preferably kept within the range of 60°C to 105°C, specifically 65°C to 100°C.

When a catalyst composed of boron trifluoride or a coordinate compound thereof is used, as a deactivation method of the catalyst after polymerization, the one for adding the polymer after polymerization to an aqueous solution containing a basic compound, or the like is possible. In order to obtain the polyacetal polymer satisfying the requirements of the present invention, however, it is preferred to pulverize the polymer obtained by the polymerization reactions into pieces, which are then brought into contact with a deactivator, thus the catalyst being promptly deactivated. For example, it is desirable that the polymer which is subjected to deactivating the catalyst be pulverized into pieces composed of 1.5 mm or smaller size for 80% by weight or more, preferably 90% by weight or more, and composed of 0. 3 mm or smaller size for 15% by weight or more, preferably 20% by weight or more. As a basic compound for neutralizing and deactivating the polymerization catalyst, there can be used: ammonia; or amines such as triethyl amine, tributyl amine, triethanol amine, or tributanol amine; or oxide, hydroxide, and salt of alkali metal and alkali earth metal; and other known catalyst deactivators. The basic compound is preferably added as an aqueous solution at concentrations within the range of 0.001 to 0.5% by weight, specifically 0.02 to 0.3% by weight. Additionally, a preferable temperature of the aqueous solution is within the range of 10°C to 80°C, and more preferably 15°C to 60 °C. After the polymerization, it is also preferable to add promptly the polymer to these aqueous solutions thereby to deactivate the catalyst.

Before the polymerization, by adding a hindered phenol-based antioxidant to the monomer within the range of 0.01 to 0.1% by weight to the total amount of monomer, and conducting the polymerization in the presence of the antioxidant uniformly in the polymerization reaction systems, the depolymerization during the polymerization can be suppressed, and thus also the oxidation decomposition during the post-treatment process such as drying and the stabilization process after the polymerization, can be suppressed.

As described above, through the reduction in the amount of impurities in the monomer and the comonomer, the selection of manufacturing process and the optimization of manufacturing conditions, or the like, the polyacetal polymer having a small amount of unstable terminals can be manufactured. If further required, the adoption of stabilization process can further reduce the amount of unstable terminals. Applicable stabilization process includes the one in which the polyacetal polymer is heated at the melting point or higher, and the polyacetal polymer in the molten state is treated thereby to decompose and remove solely the unstable parts, or the one in which the polyacetal polymer is subjected to heat treatment at 80°C or higher while maintaining the heterogeneous system in an insoluble liquid medium, thereby to decompose and remove solely the unstable terminal parts.

According to the present invention, a polyacetal resin having branched or crosslinked structure may be added to the above polyacetal copolymer. On manufacturing the polyacetal resin, the polyacetal resin having branched or crosslinked structure can be copolymerized with formaldehyde, trioxane, and the like, and is obtained by further adding and copolymerizing a compound which can form a branch unit or a crosslinking unit by the copolymerization. For example, on copolymerizing trioxane (i) with a compound (ii) selected from a cyclic ether compound and a cyclic formal compound, which compound (ii) is monofunctional without having substituent, when a monofunctional glycidyl ether compound (such as phenyl glycidyl ether or butyl glycidyl ether) having a substituent is further added thereby to conduct copolymerization, the polyacetal resin having branched structure is obtained. Furthermore, when a polyfunctional glycidyl ether compound is added to conduct the copolymerization, the polyacetal resin having crosslinked structure is obtained. A specifically preferred polyacetal resin to be added is the one having crosslinked structure, preferably the one prepared by the copolymerization of 99.89 to 88.0% by weight of trioxane (i), 0.1 to 10.0% by weight of the compound (ii) selected from a monofunctional cyclic ether compound having no substituent and a monofunctional cyclic formal compound having no substituent, and 0.01 to 2.0% by weight of a polyfunctional glycidyl ether compound (iii), and specifically preferred one is obtained by the copolymerization of 99.68 to 96.00% by weight of trioxane (i), 0.3 to 3.0% by weight of the compound (ii), and 0.02 to 1.0% by weight of the polyfunctional glycidyl ether compound (iii). A crosslinked polyacetal resin having Melt Index of 0.1 to 10 g/min is preferred.

The compound (ii) includes the same to the above, and specifically preferred ones are one or more selected from ethylene oxide, 1,3-dioxolan, 1,4-butanediol formal, and diethylene glycol formal.

Examples of the polyfunctional glycidyl ether compound (iii) include ethylene glycol diglycidyl ether, propylene glycol diglycidyl ether, 1,4-butanediol diglycidyl ether, hexamethylene glycol diglycidyl ether, resorcinol diglycidyl ether, bisphenol A diglycidyl ether, polyethylene glycol diglycidyl ether, polypropylene glycol diglycidyl ether, polybutylene glycol diglycidyl ether, glycerol triglycidyl ether, trimethylol propane triglycidyl ether, pentaerythritol tetraglycidyl ether, sorbitol polyglycidyl ether, sorbitan polyglycidyl ether, polyglycerol polyglycidyl ether, diglycerol polyglycidyl ether, and the like. These compounds can be used alone or in combination of two or more of them for the copolymerization with trioxane (i).

When the polyacetal resin having crosslinked structure is added to the above polyacetal copolymer (A), from the viewpoint of mechanical properties, a specifically preferred polyacetal resin is the one which forms a crosslinking structure by the copolymerization using a compound having 3 to 4 glycidyl ether groups in a single molecule, among the above-given polyfunctional glycidyl ether compounds (iii).

Examples of the specifically preferred polyfunctional glycidyl ether compound (iii) are trimethylol propane triglycidyl ether, glycerol triglycidyl ether, and pentaerythritol tetraglycidyl ether.

According to the present invention, when such a polyacetal resin having branched or crosslinked structure for the above polyacetal copolymer (A) is added to use, the blending amount is within the range of 0.1 to 20 parts by weight to 100 parts by weight of the polyacetal copolymer (A), and is specifically preferably 0.3 to 5 parts by weight. If the blending amount of the polyacetal resin having the branched or crosslinked structure is excessive, the molding processability and the like deteriorate, which results in insufficient mechanical properties.

### (B) Hindered phenol-based antioxidant

The hindered phenol-based antioxidant (B) used in the present invention includes a monocyclic hindered phenol compound, a polycyclic hindered phenol compound bonded by a hydrocarbon group or a group containing sulfur atom, and a hindered phenol compound having ester group or amide group.

The above compounds can be exemplified as follows:
2,6-di-t-butyl-p-cresol,
2,2'-methylenebis(4-methyl-6-t-butylphenol),
4,4'-methylenebis(2,6-di-t-butylphenol),
1,1,3-tris(2-methyl-4-hydroxy-5-t-butylphenyl)butane,
4,4'-butylidenebis(3-methyl-6-t-butylphenol),
1,3,5-trimethyl-2-4,6-tris(3,5-di-t-butyl-4-hydroxybenzyl)-benzene, 4,4'-thiobis(3-methyl-6-t-butylphenol), n-octadecyl-3-(4'-hydroxy-3',5'-di-t-butylphenyl)propionate, n-octadecyl-2-(4'-hydroxy-3',5'-di-t-butylphenyl)propionate,
1,6-hexanediol-bis[3-(3,5-di-t-butyl-4-hydroxphenyl)-propionate], ethylenebis(oxyethylene)bis-[3-(5-tert-butyl-4-hydroxy-m-tryl)propionate], pentaerythritol
tetrakis[3-(3,5-di-t-butyl-4-hydroxyphenyl)propionate], 3,9-bis[2-{3-(3-t-butyl-4-hydroxy-5-methylphenyl)-propionyloxy}-1,1-dimethylethyl]-2,4,8,10-tetraoxaspiro-[5,5]undecane,
2-t-butyl-6-(3'-t-butyl-5'-methyl-2'-hydroxybenzyl)-4-methylphenylacrylate,
2-[1-(2-hydroxy-3,5-di-t-pentylphenyl)ethyl]-4,6-di-t-pentylphenylacrylate,
di-n-octadecyl-3,5-di-t-butyl-4-hydroxybenzylphosphonate, N,N'-hexamethylenebis-(3,5-di-t-butyl-4-hydroxy-dihydrocinnamamide),
N,N'-ethylenebis-[3-(3,5-di-t-butyl-4-hydroxyphenyl)propionamide],
N,N'-tetramethylenebis-[3-(3,5-di-t-butyl-4-hydroxyphenyl)propionamide],
   N,N'-hexamethylenebis-[3-(3,5-di-t-butyl-4-hydroxyphenyl)propionamide],
N,N'-ethylenebis-[3-(3-t-butyl-5-methyl-4-hydroxyphenyl)propionamide],
N,N'-hexamethylenebis-[3-(3-t-butyl-5-methyl-4-hydroxyphenyl)propionamide],
N,N'-bis[3-(3,5-di-t-butyl-4-hydroxyphenyl)propionyl]-hydrazine,
N,N'-bis[3-(3-t-butyl-5-methyl-4-hydroxphenyl)propionyl]-hydrazine,
1,3,5-tris(3,5-di-t-butyl-4-hydroxybenzyl)isocyanulate,
1,3,5-tris(4-t-butyl-3-hydroxy-2,6-dimethylbenzyl)-isocyanulate, and the like.

These hindered phenol-based antioxidants (B) can be used alone or in combination of two or more of them. The additive amount of the hindered phenol-based antioxidant (B) is within the range of 0.01 to 3 parts by weight to 100 parts by weight of the polyacetal copolymer (A). If the amount is less than that range, the effect becomes insufficient. If the amount is more than that range, problems of coloring, bleeding, and the like may occur.

### (C) Guanamine compound, triazine compound

Guanamine compound and triazine compound used in the present invention include melamine, aliphatic guanamine-based compound, alicyclic guanamine-based compound, aromatic guanamine-based compound, and hetero-atom-containing guanamine-based compound.

Examples of the aliphatic guanamine-based compound are: monoguanamines such as valeroguanamine, caproguanamine, heptanoguanamine, capryloguanamine, or stearoguanamine; and alkylene bisguanamines such as succinoguanamine, glutaroguanamine, adipoguanamine, pimeloguanamine, suberoguanamine, azeloguanamine, or sebacoguanamine.

Examples of the alicyclic guanamine-based compound are: monoguanamines such as cyclohexane carboguanamine, norbornene carboguanamine, cyclohexene carboguanamine, or norbornane carboguanamine; and derivatives thereof in which the cycloalkane residue is substituted with 1 to 3 of functional groups such as alkyl group, hydroxy group, amino group, acetoamino group, nitrile group, carboxy group, alkoxycarbonyl group, carbamoyl group, alkoxy group, phenyl group, cumyl group, or hydroxyphenyl group.

Examples of the aromatic guanamine-based compound are: benzoguanamine and derivatives thereof in which the phenyl residue is substituted with 1 to 5 of functional groups such as alkyl group, hydroxy group, amino group, acetoamino group, nitrile group, carboxy group, alkoxy carbonyl group, carbamoyl group, alkoxy group, phenyl group, cumyl group or hydroxyphenyl group, (for example, toluguanamine, xyloguanamine, phenylbenzoguanamine, hydroxybenzoguanamine, 4-(4'-hydroxyphenyl)benzoguanamine, nitrilebenzoguanamine, 3,5-dimethyl-4-hydroxybenzoguanamine and 3,5-di-t-butyl-4-hydroxybenzoguanamine); monoguanamine such as naphthoguanamine or derivatives thereof in which the naphthyl residue is substituted with the above functional group; polyguanamines such as phthaloguanamine, isophthaloguanamine, terephthaloguanamine, naphthalene diguanamine or biphenylene diguanamine; and aralkyl or aralkylene guanamines such as phenylacetoguanamine, β-phenylpropioguanamine or xylylene bisguanamine.

Examples of the heteroatom-containing guanamine-based compound include: acetal group-containing guanamines such as 2,4-diamino-6-(3,3-dimethoxypropyl)-s-triazine; dioxane ring-containing guanamines such as [2-(4'-6'-diamino-s-triazine-2'-yl)ethyl]-1,3-dioxane or [2-(4'-6'-diamino-s-triazine-2'-yl)ethyl]-4-ethyl-4-hydroxymethyl-1,3-dioxane; tetraoxospiro ring-containing guanamines such as CTU-guanamine or CMTU-guanamine; isocyanule ring-containing guanamines such as 1,3,5-tris[2-(4',6'-diamino-s-triazine-2'-yl)ethyl]isocyanulate or 1,3,5-tris[3-(4',6'-diamino-s-triazine-2'-yl)propyl]isocyanulate; imidazoyl ring-containing guanamines such as the guanamine compounds disclosed in JP-A 6-179671 and JP-A 7-10871; imidazole ring-containing guanamines such as the guanamine compounds disclosed in JP-A 47-41120, JP-A 3-284675, and JP-A 7-33766; and guanamine compounds disclosed in JP-A 2000-154181.

Furthermore, there are also included a compound in which hydrogen of amino group of the above guanamine-based compound is substituted with alkoxymethyl group, such as (mono to tetra) methoxymethylbenzoguanamine, or (mono to octa) methoxymethyl-CTU-guanamine.

Among these guanamine-based compounds and triazine compounds, specifically preferred ones are melamine, benzoguanamine, and CTU-guanamine.

According to the present invention, the additive amount of the compound selected from the above guanamine-based compound and triazine compound is within the range of 0.05 to 1.0 part by weight to 100 parts by weight of the polyacetal copolymer (A), and preferably 0.07 to 0.8 part by weight. When the additive amount of the compound (C) is excessively small, the polyacetal resin composition having fully reduced generation of formaldehyde cannot be obtained, and further it becomes difficult to maintain the amount of formaldehyde generated by repeated heat history at a low level. On the other hand, when the additive amount of the compound (C) is excessively large, problems such as deterioration in mechanical properties and poor appearance caused by bleeding occur.

### (D) Iso(thio)cyanate compound and modified compound thereof

The polyacetal resin composition according to the present invention has features of further adding a component (D) selected from an isocyanate compound, an isothiocyanate compound, and a modified compound thereof in addition of the above (A) to (C) components, which further improves the effect of reducing amount of formaldehyde generated from a molded article achieved by (A) to (C) components, and further suppresses the bleeding of the blending component (C). The above effect attained by adding the (D) compound (D) has not been expected. Specifically, the use of the polyacetal copolymer (A) having specific terminal group characteristics, as a base resin, makes the polyacetal copolymer with inherently poor activity, further inactive, and facilitates the bleeding of the component (C). However, surprisingly, the addition of component (D) significantly suppressed the bleeding of such component (C).

Preferred compound (D) used for the above objective includes an isocyanate compound represented by the formula of O=C=N-R-N=C=O (R: divalent group), an isothiocyanate compound represented by S=C=N-R-N=C=S (R: divalent group), and a modified compound thereof. Examples of the isocyanate compound include 4,4'-methylenebis(phenyl isocyanate), 2,4-trilene diisocyanate, 2,6-trilene diisocyanate, xylene diisocyanate, 1,6-hexamethylene diisocyanate, isophorone diisocyanate, 1,5-naphthalene diisocyanate, 2,2,4-trimethylhexamethylene diisocyanate, and 2,4,4-trimethylhexamethylene diisocyanate. An example of the isothiocyanate compound includes a diisothionate corresponding to the above isocyanate compounds. Examples of the modified compound include these isocyanate compounds of thereabove, a dimer and trimer of an isothiocyanate compound, and a compound in which the isocyanate group (-NCO) is protected in some way. These are all effective, but in consideration of various properties such as discoloration during melt treatment and the like, or safety in handling, specifically preferred compounds are 4,4'-methylenebis(phenylisocyanate), isophorone diisocyanate, 1,5-naphthalene diisocyanate, 1,6-hexamethylene diisocyanate, 2,4-trylene diisocyanate, 2,6-trilene diisocyanate, and modified compounds (or derivatives) such as dimer and trimer thereof.

Although actions and effects of the compound (D) selected from the above isocyanate compound, isothiocyanate compound, and a modified compound thereof are not fully clarified, there are expected effects such as: suppressing the decomposition of polyacetal by the reaction between the compound (D) and the polyacetal (A); reducing the generation of formaldehyde by the reaction between the compound (D) and formaldehyde; suppressing the generation of formaldehyde owing to the reverse reaction of a reaction product between the component (C) and formaldehyde, caused by the reaction between the reaction product of the component(C) and formaldehyde, and the compound (D); and suppressing the bleeding of the component (C) by the reaction between the component (C) and the compound (D).

According to the present invention, the blending amount of the compound (D) selected from the isocyanate compound, the isothiocyanate compound, and a modified compound thereof is within the range of 0,01 to 1 part by weight to 100 parts by weight of the polyacetal resin (A), and preferably 0.01 to 0.8 part by weight. An excessively small amount of the component (D) results in a small effect of reducing the amount of formaldehyde, and fails to produce the effect of suppressing the bleeding of the component (C). On the other hand, the excessive addition of the compound (D) causes problems of increasing the viscosity of molten resin, and exuding the compound (D) itself.

For further improving the thermal stability, the long-term thermal stability, and the like, the polyacetal resin composition of the present invention can contain and is preferable to contain a compound (E) selected from an organic carboxylic acid metal salt, a metal oxide, and a metal hydroxide. The additive amount of the compound (E) is preferably within the range of 0.01 to 1 part by weight to 100 parts by weight of the polyacetal copolymer (A).

Examples of an applicable organic carboxylic acid which forms the organic carboxylic acid metal salt are various kinds of aliphatic carboxylic acids containing approximately 1 to 34 carbons and include saturated aliphatic monocarboxylic acid, saturated aliphatic dicarboxylic acid, unsaturated aliphatic monocarboxylic, unsaturated aliphatic dicarboxylic acid, and an oxyacid thereof. These aliphatic dicarboxylic acids may have hydroxyl group. Alternatively, there may be a copolymer of olefin with polymerizable unsaturated carboxylic acids such as (meth) acrylic acid, maleic acid, fumaric acid, maleic acid anhydride, or maleic acid monoethyl. Examples of the organic carboxylic acid metal salt include: alkali metal organic carboxylates such as lithium citrate, potassium citrate, sodium citrate, lithium stearate, or lithium 12-hydroxystearate; alkali earth metal organic carboxylates such as magnesium acetate, calcium acetate, magnesium citrate, calcium citrate, calcium stearate, magnesium stearate, magnesium 12-hydroxystearate, or calcium 12- hydroxystearate; and an ionomer resin. Among these organic carboxylic acid metal salts, there are preferred: alkali earth metal salts such as calcium citrate, magnesium stearate, calcium stearate, magnesium 12-hydroxystearate, and calcium 12-hydroxystearate; and an ionomer resin.

Preferred metal oxide and metal hydroxide are calcium oxide, magnesium oxide, zinc oxide, calcium hydroxide, magnesium hydroxide, and the like.

To the polyacetal resin composition according to the present invention, there can further be added weather (light) stabilizer, impact resistance modifier, gloss-controlling agent, sliding property modifier, filler, coloring agent, nucleation agent, releasing agent, antistatic agent, surfactant, antibacterial agent, antifungal agent, aroma, foaming agent, compatibility agent, property modifier (such as boric acid and derivatives thereof), perfume, and the like. The various properties corresponding to each additive can be improved without adversely affecting the object of the present invention. Furthermore, there can be simultaneously used an antioxidant, a heat-resistant stabilizer, a processing modifier, and the like, other than the above additives.

Examples of the weather (light) stabilizer include (a) a benzotriazole-based compound, (b) a benzophenone-based compound, (c) an aromatic benzoate-based compound, (d) a cyanoacrylate-based compound, (e) an oxanilide-based compound, (f) a hydroxyphenyl-1,3,5-triazine-based compound, and (g) a hindered amine-based compound.

Examples of the (a) benzotriazole-based compound include: bebzotriazoles having hydroxyl group and alkyl(C₁₋₆ alkyl)group-substituted aryl group, such as 2-(2'-hyroxy-5'-methylphenyl)benzotriazole, 2-(2'-hydroxy-3',5'-di-t-butylphenyl)benzotriazole, 2-(2'-hydroxy-3',5'-di-t-amylphenyl)benzotriazole, or 2-(2'-hydroxy-3',5'-diisoamylphenyl)benzotriazole; benzotriazoles having hydroxyl group and aralkyl(or aryl)group-substituted aryl group, such as 2-[2'-hydroxy-3',5'-bis(a,a-dimethylbenzyl)phenyl]benzotria zole; or benzotriazoles having hydroxyl group and alkoxy(C₁₋₁₂ alkoxy)group-substituted aryl group, such as 2-(2'-hydroxy-4'-octoxyphenyl)benzotriazole. Preferred benzotriazole-based compound includes benzotriazoles having hydroxyl group and C₃₋₆ alkyl group-substituted C₆₋₁₀ aryl (specifically phenyl) group, and benzotriazoles having hydroxyl group and C₆₋₁₀ aryl-C₁₋₆ alkyl (specifically phenyl C₁₋₄ alkyl) group-substituted aryl group.

Examples of the benzophenone-based compound (b) include: benzophenones having pluralities of hydroxyl groups, (di- to tetra-hydroxybenzophenone such as 2,4-dihydroxybenzophenone, and benzophenone having hydroxyl group and hydroxyl-substituted aryl group or aralkyl group such as 2-hydroxy-4-oxybenzylbenzophenone); and benzophenones having hydroxyl group and alkoxy (C₁-₁₆ alkoxy) group, (such as 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone or 2-hydroxy-4-methoxy-5-sulfobenzophenone). Preferred benzophenone-based compound includes benzophenones having hydroxyl group and hydroxyl group-substituted C₆₋₁₀ aryl (or C₆₋₁₀ aryl-C₁₋₄ alkyl)group, specifically benzophenones having hydroxyl group and hydroxyl group-substituted phenyl C₁₋₂ alkyl group.

The aromatic benzoate-based compound (c) includes alkylphenylsalicylate such as p-t-butylphenylsalicylate-p-octylphenylsalicylate.

The cyanoacrylate-based compound (d) includes cyano group-containing diphenylacrylates such as 2-ethylhexyl-2-cyano-3,3-diphenylacrylate or ethyl-2-cyano-3,3-diphenylacrylate.

The oxanilide-based compound (e) includes a diamide oxalate having phenyl group, which may be substituted on the nitrogen atom, such as N-(2-ethylphenyl)-N'-(2-ethoxy-5-t-butylphenyl)diamide oxalate or N-(2-ethylphenyl)-N'-(2-ethoxy-phenyl)diamide oxalate.

The hydroxyphenyl-1,3,5-triazine-based compound (f) includes: di C₆₋₁₅ aryl-(hydroxyl-C₁₋₂₀ alkoxyphenyl)-1,3-5-triazines such as
2,4-diphenyl-6-(2-hydroxyphenyl)-1,3,5-triazine,
2,4-diphenyl-6-(2,4-dihydroxyphenyl)-1,3-5-triazine,
2,4-diphenyl-6-(2-hydroxy-4-methoxyphenyl)-1,3,5-triazine,
2,4-diphenyl-6-(2-hydroxy-4-ethoxyphenyl)-1,3,5-triazine,
2,4-diphenyl-6-(2-hydroxy-4-propoxyphenyl)-1,3,5-triazine,
2,4-diphenyl-6-(2-hydroxy-4-butoxyphenyl)-1,3,5-triazine,
2,4-diphenyl-6-(2-hydroxy-4-hexyloxyphenyl)-1,3,5-triazine,
2,4-diphenyl-6-(2-hydroxy-4-octyloxyphenyl)-1,3,5-triazine,
2,4-diphenyl-6-(2-hydroxy-4-dodecyloxyphenyl)-1,3,5-triazine,
2,4-di-p-6-toluyl-6-(2-hydroxy-4-methoxyphenyl)-1,3,5-triazine,
2,4-di-p-toluyl-6-(2-hydroxy-4-propoxyphenyl)-1,3,5-triazine,
2,4-di-p-toluyl-6-(2-hydroxy-4-butoxyphenyl)-1,3,5-triazine,
2,4-di-p-toluyl-6-(2-hydroxy-4-hexyloxyphenyl)-1,3,5-triazine,
2,4-di-p-toluyl-6-(2-hydroxy-4-pentoxyphenyl)-1,3,5-triazine,
2,4-di-p-toluyl-6-(2-hydroxy-4-octyloxyphenyl)-1,3,5-triazine,
2,4-di(2,4-dimethylphenyl)-6-(2-hydroxy-4-methoxyphenyl)-1,3,5-triazine,
2,4-di(2,4-dimethylphenyl)-6-(2-hydroxy-4-propoxyphenyl)-1,3,5-triazine,
2,4-di(2,4-dimethylphenyl)-6-(2-hydroxy-4-butoxyphenyl)-1,3,5-triazine, or
2,4-di(2,4-dimethylphenyl)-6-(2-hydroxy-4-hexyloxyphenyl)-1,3,5-triazine; di C₆₋₁₅ aryl-(hydroxyl-C₆₋₁₀ aryl C₁₋₄ alkyloxy-phenyl)-1,3,5-triazines such as
2,4-diphenyl-6-(2-hydroxy-4-benzyloxyphenyl)-1,3,5-triazine, 2,4-di-p-toluyl-6-(2-hydroxy-4-benzyloxyphenyl)-1,3,5-triazine, or 2,4-di(2,4-dimethylphenyl)-6-(2-hydroxy-4-benzyloxyphenyl)-1,3,5-triazine; and di C₆₋₁₅ aryl-(hydroxy-C₁₋₁₀ alkoxyethoxy-phenyl)-1,3,5-triazines such as 2,4-diphenyl-6-(2-hydroxy-4-(2-butoxyethoxy)phenyl)-1,3,5-triazine, or 2,4-di-p-toluyl-6-(2-hydroxy-4-(2-hexyloxyethoxy)phenyl)-1,3,5-tirazine.

The hindered amine-based compound (g) includes: piperidine derivatives having a sterically hindered group, such as ester group-containing piperidine derivatives, (including aliphatic acyloxy piperidines (C₂₋₂₀ aliphatic acyloxy-tetramethyl piperidine, and the like) such as 4-acetoxy-2,2,6,6-tetramethylpiperidine, 4-stearoyloxy-2,2,6,6-tetramethylpiperidine, or 4-acryloyloxy-2,2,6,6-tetramethylpiperidine); aromatic acyloxypiperidines (C₇₋₁₁ aromatic acyloxytetramethylpiperidine, and the like) such as 4-benzoyloxy-2,2,6,6-tetramethylpiperidine; aliphatic di- or tri-carboxylic acid-bis or trispiperidylesters (C₂₋₂₀ aliphatic dicarboxylic acid-bispiperidylester, and the like) such as bis(2,2,6,6-tetramethyl-4-piperidyl)oxalate, bis(2,2,6,6-tetramethyl-4-piperidyl)malonate, bis(2,2,6,6-tetramethyl-4-piperidyl)adipate, bis(1,2,2,6,6-pentamethyl-4-piperidyl)adipate, bis(2,2,6,6-tetramethyl-4-piperidyl)sebacate, or bis(1,2,2,6,6-pentamethyl-4-piperidyl)sebacate; and aromatic di- to tetra-carboxylic acid-bis- to tetrakis-piperidylesters, (aromatic di- or tri-carboxylic acid-bis- or tris-piperidylester, and the like), such as bis(2,2,6,6-tetramethyl-4-piperidyl)terephthalate, or tris(2,2,6,6-tetramethyl-4-piperidyl)benzene-1,3,5-tricarbo xylate); an ether group-containing piperidine derivative, (such as C₁₋₁₀ alkoxypiperidine (C₁₋₆ alkoxy-tetramethylpiperidine and the like) such as 4-methoxy-2,2,6,6-tetramethylpiperidine; C₅₋₈ cycloalkyloxypiperidine such as 4-cyclohexyloxy-2,2,6,6-tetramethylpiperidine; C₆₋₁₀ aryloxypiperidine such as 4-phenoxy-2,2,6,6-tetramethylpiperidine ; C₆₋₁₀ aryl-C₁₋₄ alkyloxypiperidine such as 4-benzyloxy-2,2,6,6-tetramethylpiperidine; and alkylenedioxybispiperidine (C₁₋₁₀ alkyleneoxybispiperidine and the like) such as 1,2-bis(2,2,6,6-tetramethyl-4-piperidyloxy)ethane); and amide group-containing piperidine derivatives (such as carbamoyloxypiperidine such as 4-(phenylcarbamoyloxy)-2,2,6,6-tetramethylpiperidine; carbamoyloxy-substituted alkylenedioxy-bispiperidine such as bis(2,2,6,6-tetramethyl-4-piperidyl)hexamethylene-1,6-dicar bamate). Other examples include high-molecular-weight piperidine derivative polycondensates (such as polycondensate of dimethylsuccinate-1-(2-hydroxyethyl)-4-hydroxy-2,2,6,6-tetramethylpiperidine, and poly{6-[(1,1,3,3-tetramethylbutyl)imino-1,3,5-triazine-2,4-diyl][2-(2,2,6,6-tetramethylpiperidyl)amino]-hexamethylene[4-(2,2,6,6-tetramethylpiperidyl)imino]}).

The weather (light) stabilizer may be used alone or in combination of two or more of same or different compounds thereof. The weather stabilizer is preferably used in combination of the hindered amine-based compound (g) with at least one selected from other weather (light) stabilizers (a) to (f), and specifically preferred combination is the benzotriazole-based compound (a) with the hindered amine-based compound (f). The additive amount of the weather (light) stabilizer is, for example, within the range of 0 to 5 parts by weight (for example, 0.01 to 5 parts by weight) to 100 parts by weight of the polyacetal copolymer, preferably 0.1 to 4 parts by weight, and may be more preferably about 0.1 to 2 parts by weight.

The impact resistance modifier includes thermoplastic polyurethane-based resin, acrylic-based core-shell polymer, thermoplastic polyester-based elastomer, styrene-based elastomer, an olefin-based elastomer, polyamide-based elastomer, and a rubber component (such as natural rubber).

The gloss-controlling agent includes an acrylic-based core-shell polymer, a thermoplastic polyurethane, a thermoplastic polyester elastomer, a polyamide-based elastomer, one single polymer or a copolymer of an alkyl (meth) acrylate (such as a polymethylmethacrylate), a polycarbonate-based resin, a styrene-based resin (such as a polystyrene, an AS resin, or an AES resin), and such as an olefin-based resin (such as a polypropylene or a cyclic polyolefin).

The sliding property modifier includes an olefin-based polymer (such as a polyethylene, a polypropylene, a copolymer of ethylene with α-olefin or a modified compound derived from these acid anhydrides thereof), wax (such as a polyethylene wax), silicone oil and a silicone-based resin, a fluorine-based resin (such as a polytetrafluoroethylene), and a fatty acid ester.

The filler includes: inorganic or organic fibrous fillers such as glass fiber, carbon fiber, boron fiber, potassium titanate fiber, metal fiber, or aramid fiber; plate-like fillers such as glass flake, mica, or graphite; and powder-particle fillers such as milled fiber, glass bead, glass balloon, talc, kaolin, silica, diatom earth, clay, wollastonite, alumina, graphite fluoride, silicon carbide, boron nitride, or metal powder.

The releasing agent includes long-chain fatty acid amide, and there is applicable an acid amide (such as monoamide or bisamide) of a long-chain fatty acid (monovalent or divalent long-chain fatty acid) with an amine (such as monoamine, diamine, or polyamine). The monoamide includes: primary acid amides of saturated fatty acid such as capric acid amide, lauric acid amide, myristic acid amide, palmitic acid amide, stearic acid amide, arachic acid amide, behenic acid amid, or montanic acid amide; primary acid amides of unsaturated fattsy acid such as oleic acid amide; and secondary acid amides of monoamine with saturated and/or unsaturated fatty acid such as stearyl stearic acid amide and stearyl oleic acid amide. Furthermore, the bisamide includes the one of C₁₋₆ alkylenediamine (specifically C₁₋₂ alkylenediamine) with the above fatty acid, and concrete examples thereof include ethylenediamine-dipalmitic acid amide, ethylenediamine-distearic acid amide (ethylene bisstearyl amide), hexamethylenediamine-distearic acid amide, ethylenediamine-dibehenic acid amide,
ethylenediamine-dimontanic acid amide,
ethylenediamine-dioleic acid amide, and
ethylenediamine-dierucic acid amide. Furthermore, there can be used a bisamide having a structure in which a different acyl group is bound at an amine position of the alkylenediamine such as ethylenediamine-(stearic acid amide)oleic acid amide.

The polyacetal resin composition of the present invention preferably contains a releasing agent. A specifically preferable releasing agent is a fatty acid bisamide compound (F). The blending amount of the releasing agent is preferably within the range of 0.01 to 1 part by weight to 100 parts by weight of the polyacetal copolymer (A).

As a coloring agent, varieties of dyes and pigments can be used. The dyes can be exemplified as follows: azo-based dye, anthraquinone-based dye, phthalocyanine-based dye, naphthoquinone-based dye, and the like. The pigments may be any of inorganic pigments and organic pigments. The inorganic pigment can be exemplified as follows: titanium-based pigment, zinc-based pigment, carbon black, iron-based pigment, molybdenum-based pigment, cadmium-based pigment, lead-based pigment, cobalt-based pigment, and aluminum-based pigment. The organic pigment can be exemplified as follows: azo-based pigment, anthraquinone-based pigment, phtharocyanine-based pigment, quinacridone-based pigment, perylene-based pigment, perynone-based pigment, isoindoline-based pigment, dioxazine-based pigment, and threne-based pigment. Among these, the use of carbon black, titanium oxide, phtharocyanine-based pigment, and perylene-based pigment, which are coloring agents having high light-shielding effect, can also improve the weather (light) resistance. The amount of the coloring agent to be added is not specifically limited, and the amount for ordinary coloring object is applied.

The method for manufacturing the polyacetal resin composition according to the present invention is not specifically limited, and the polyacetal resin composition can be manufactured by various kinds of conventionally known methods. For example, applicable methods are (1) the one for mixing all components constituting the composition, and then the mixture is supplied to an extruder thereby to melt and knead the mixture, thus the composition in pellet shape being obtained; (2) the one for supplying a portion of the components constituting the composition from the main feed opening of an extruder, while supplying residual components from a side feed opening, thereby to melt and knead the components, thus the composition in pellet shape being obtained; and (3) the one for preparing pellets having different compositions from each other by extrusion or the like, and then for mixing the pellets thereby to prepare the intended composition.

In the preparation of the composition using an extruder, an extruder which has one or more degassing-vent opening is preferably used. Furthermore, it is preferable that water and a low-boiling alcohol be supplied to an arbitrary position between the main feed opening and the degassing-vent opening at a rate of about 0.1 to about 10 parts by weight to 100 parts by weight of the polyacetal resin, thereby to degas and remove formaldehyde and the like generated in the extrusion process along with the water and low-boiling alcohol from the degassing-vent opening. By this operation, the amount of formaldehyde generated from the polyacetal resin composition and the molded article thereof can further be reduced.

Thus manufactured polyacetal resin composition of the present invention can be molded by various types of conventionally known molding methods including injection molding, extrusion molding, compression molding, vacuum molding, blow molding, and foaming molding.

The present invention also includes the recycling of molded articles composed of the above polyacetal resin composition and of the above-described colored polyacetal resin composition. In concrete terms, they are the recycled resin composition prepared by melt-kneading and extruding the molded article or pulverized molded article composed of these resin compositions alone or together with resin material or molded article having the same composition thereeach or different composition therefrom, and the recycled molded article prepared by melting and kneading to mold the molded article or pulverized molded article composed of these resin compositions separately or together with resin material or molded article having the same composition thereeach or different composition therefrom. The recycled resin composition and the recycled molded article thus prepared by the repeated melt-heat history are also the ones which maintain the amount of generated formaldehyde at an extremely low level as with the polyester resin composition to be the basis for these recycled resin composition and recycled molded article.

### Examples

The present invention will be explained below by means of Examples, but is not limited to them. Every "part" referred to in Examples and Comparative Examples represent part by weight. Characteristics evaluated in Examples and Comparative Examples and methods of the evaluation are as follows.

### (1) Amount of formaldehyde generated from molded article

Using the polyacetal resin compositions prepared in Examples and Comparative Examples, the tabular test pieces (100 mm × 40 mm × 2 mm thick) were molded under the condition given below. Two sheets of the test pieces were sealed and deaerated in a 10 L sampling bag made of vinyl fluoride. Then 4 L of nitrogen gas was introduced in the bag, which was then heated for 2 hours at 65°C. After that, the nitrogen gas in the sampling bag was withdrawn by 3 L at a rate of 0. 5 ml/min thereby to adsorb the generated formaldehyde in a collection tube of DNPH (2,4-dinitrophenylhydrazine), (Sep-Pak DNPH-Silica, manufactured by Waters, Inc.). Then, the reaction product of DNPH with formaldehyde was extracted with solvent acetonitrile from the DNPH collection tube, and the amount of the generated formaldehyde was determined by a high-performance liquid chromatograph applying the calibration curve method using a reference substance of the reaction product of DNPH and formaldehyde. Thus the amount of the generated formaldehyde (µ g/g) per unit weight of the test piece was calculated.
* Molding machine: J75E-P produced by Japan Steel Works, Ltd.
* Molding condition:

| | | | | |
|---|---|---|---|---|
| Cylinder temperature (°C) | Nozzle - | C1 - | C2- | C3 |
| | 190 | 190 | 180 | 160 |

Injection pressure: 60 (MPa)
Injection rate: 1.0 (m/min)
Mold temperature: 50 (°C)

### (2) Amount of bleeding from molded article

Using a mirror-finished mold, the test pieces (70 mm × 50 mm × 3 mm thick) were molded under the following condition.
* Molding machine: SG50 SYCAP-M produced by Sumitomo Heavy Industries, Ltd.
* Molding condition:

| | | | | |
|---|---|---|---|---|
| Cylinder temperature (°C) | Nozzle - | C1 - | C2- | C3 |
| | 200 | 200 | 180 | 160 |

Injection pressure: 60 (MPa)
Injection rate: 1.0 (m/min)
Mold temperature: 80 (°C)

The prepared molded articles were allowed to stand for 96 hours in a thermostat set at 65°C and 90 RH %. After that, the bleeding material appeared on the surface of the molded article was visually observed, and the amount of bleeding was determined based on the following criteria.
0: No bleeding material was observed.
1: Slight bleeding material was observed in a part of the molded article.
2: Bleeding material was observed in a part of the molded article.
3: Bleeding material was observed on the whole surface of the molded article.

### Examples 1 to 6

To the polyacetal copolymer (A), there were blended the hindered phenol-based antioxidant (B), the formaldehyde scavenger (guanamine compound) (C), the isocyanate compound (D), and other compounds at the composition shown in Table 1. From the mixture, the pellet-shape compositions were prepared by melt-kneading the mixture in a 30 mm twin-screw extruder. From thus prepared pellets, the test pieces were molded using an injection molding machine under the above molding conditions (1). The amount of formaldehyde generated from the molded article was determined. Furthermore, other test pieces were molded by the injection molding machine under the above molding condition (2), and the bleeding material from the molded article was observed. The result is shown in Table 1.

### Comparative Examples 1 to 4

As shown in Table 1, when any one or more components of the formaldehyde scavenger (C) and the isocyanate compound (D) were not added, or when a polyacetal copolymer which do not satisfy the specification of the terminal group according to the present invention was used as the polyacetal copolymer (A), the compositions were prepared in the same manner as that in Examples, and the properties of them were evaluated. The result is shown in Table 1.

The components used in Examples and Comparative Examples are shown as follows.

### • Polyacetal copolymer (A)

a-1: Polyacetal copolymer [amount of hemiformal terminal group = 0.38 mmol/kg, amount of formyl terminal group = 0.03 mmol/kg, amount of unstable terminal group = 0.15% by weight, Melt Index = 9 g/10 min]
a-2: Polyacetal copolymer [amount of hemiformal terminal group = 1.20 mmol/kg, amount of formyl terminal group = 0. 60 mmol/kg, amount of unstable terminal group = 0.6% by weight, Melt Index = 9 g/10 min]

Both the polyacetal copolymers a-1 and a-2 were prepared by the following procedure.

To a continuous polymerization apparatus of two-shaft paddle type, there was continuously supplied a mixture of 96.7% by weight of trioxane and 3.3% by weight of 1,3-dioxolan, and further 15 ppm of boron trifluoride as a catalyst thereby to conduct the polymerization. The mixture of trioxane and 1,3-dioxolan to be subjected to the polymerization contained 0.03% by weight of pentaerythritol-tetrakis-[3-(3,5-di-t-butyl-4-hydroxyphenyl)propionate] to the total amount of the mixture. The mixture of trioxane and 1, 3-dioxolan to be subjected to the polymerization contained 6 ppm of water, 3.5 ppm of methanol, and 5 ppm of formic acid as impurities.

To the polymer discharged from the discharge opening of the polymerization apparatus, an aqueous solution of 1000 ppm triethylamine was immediately added, which was then immediately pulverized and agitated thereby to deactivate the catalyst. Then, the mixture was centrifuged and dried to obtain crude polyoxymethylene copolymer.

After that, the crude polyoxymethylene copolymer was supplied to a twin-screw extruder having a vent opening. By melt-kneading the copolymer at about 220°C of resin temperature, the unstable terminal parts was decomposed, and the volatile matter containing decomposed products was degassed from the vent opening by depressurizing the system. By cooling and cutting the polymer discharged from the die of the extruder, the pellet-shape polyacetal copolymer a-2 after removing the unstable terminal parts was obtained.

Then, using a cylindrical pressure-resistant vessel which can retain heat, the pellet-shape polymer was continuously supplied from top thereof, while supplying an aqueous solution at 135°C containing 500 ppm of triethylamine from bottom thereof thereby to conduct the treatment for 8 hours. After that, the mixture was centrifuged and dried to obtain the polyacetal copolymer a-1 having further reduced amounts of hemiformal terminal group, formyl terminal group, and unstable terminal group.

The amount of hemiformal terminal group and of formyl terminal group of the polyacetal copolymer is the value (mmol/kg) determined by a method based on the description of JP-A 2001-11143 using Model AVANCE400 FT-NMR produced by Bruker Inc. The above Melt Index is the value (g/10 min) determined under the conditions of 190°C and 2160 g in accordance with ASTM-D1238.

### • Antioxidant (B)

b-1: Pentaerythritol tetrakis[3-(3,5-di-t-butyl-4-hydroxyphenyl)propionate] (IRGANOX1010)

### · Guanamine compound (C)

c-1: Melamine
c-2: Benzoguanamine

### • Isocyanate compound (D)

d-1: Isophorondiisocyanate (trimer) (VESTANAT T1890/100) d-2: Isophorondiisocyanate (monomer) (VESTANAT IPDI)

### • Metal compound (E)

e-1: Calcium 12-hydroxystearate

### · Fatty acid bisamide compound (F)

f-1: Ethylenebisstearyl amide

**Table 1**

| | | Examples | | | | | | Comparative Examples | | | |
|---|---|---|---|---|---|---|---|---|---|---|---|
| | | 1 | 2 | 3 | 4 | 5 | 6 | 1 | 2 | 3 | 4 |
| Polyacetal copolymer | (type) | a-1 | a-1 | a-1 | a-1 | a-1 | a-1 | a-1 | a-1 | a-1 | a-2 |
| | (parts by weight) | 100 | 100 | 100 | 100 | 100 | 100 | 100 | 100 | 100 | 100 |
| Hindered phenol-based antioxidant | (type) | b-1 | b-1 | b-1 | b-1 | b-1 | b-1 | b-1 | b-1 | b-1 | b-1 |
| | (parts by weight) | 0.30 | 0.30 | 0.30 | 0.30 | 0.30 | 0.30 | 0.30 | 0.30 | 0.30 | 0.30 |
| Guanamine-based compound | (type) | c-1 | c-1 | c-1 | c-1 | c-2 | c-2 | | c-1 | c-2 | c-1 |
| | (parts by weight) | 0.50 | 0.50 | 0.50 | 0.50 | 0.15 | 0.15 | | 0.50 | 0.15 | 0.50 |
| Isocyanate compound | (type) | d-1 | d-1 | d-2 | d-2 | d-1 | d.2 | | | | d-1 |
| | (parts by weight) | 0.10 | 0.50 | 0.30 | 0.50 | 0.50 | 0.50 | | | | 0.50 |
| Metal compound (E) | (type) | e-1 | e-1 | e-1 | e-1 | e-1 | e-1 | e-1 | e-1 | e-1 | e-1 |
| | (parts by weight) | 0.10 | 0.10 | 0.10 | 0.10 | 0.10 | 0.10 | 0.10 | 0.10 | 0.10 | 0.10 |
| Fatty acid bisamide (F) | (type) | f-1 | f-1 | f-1 | f-1 | f-1 | f-1 | f-1 | f-1 | f-1 | f-1 |
| | (parts by weight) | 0.20 | 0.20 | 0.20 | 0.20 | 0.20 | 0.20 | 0.20 | 0.20 | 0.20 | 0.20 |
| Formaldehyde generation amount from molded article (µg/g) | | 0.08 | 0.07 | 0.08 | 0.07 | 0.13 | 0.12 | 0.76 | 0.18 | 0.30 | 0.34 |
| Amount of bleeding from molded article | | 0 | 0 | 0 | 0 | 1 | 1 | 0 | 0 | 3 | 0 |

## Claims

1. A polyacetal resin composition comprising:
100 parts by weight of (A) a polyacetal copolymer containing 1.0 mmol/kg or less of hemiformal terminal group, 0.5 mmol/kg or less of formyl terminal group, and 0.5% by weight or less of unstable terminal group;
0.01 to 3 parts by weight of (B) a hindered phenol-based antioxidant;
0.05 to 1 part by weight of (C) at least one compound selected from the group consisting of guanamine compounds and triazine compounds; and
0.01 to 1 part by weight of (D) a compound selected from the group consisting of an isocyanate compound, an isothiocyanate compound and a modified compound thereof wherein the amount of the unstable terminal group is determined as follows: one gram of polyacetal copolymer is placed in a pressure-resistant closed container together with 100 ml aqueous solution of 50% (by volume) methanol containing 0.5% by volume of ammonium hydroxide; the mixture is heated to 180°C for 45 minutes, and then is cooled; the container is opened, and the amount of formaldehyde decomposed and eluted in the solution is quantified thereby to express the amount as weight percent to the amount of polyacetal copolymer, which is the amount of the unstable terminal group;
and with the proviso that the composition does not comprise both 0.01 to 5 parts by weight of a weathering (light) stabilizer and 1 to 50 parts by weight of a core-shell polymer having a core of a rubbery polymer and a shell of a glassy polymer composed of a vinyl-based copolymer.

2. The polyacetal resin composition according to claim 1, wherein the (D) compound is selected from the group consisting of a diisocyanate compound, a diisothiocyanate compound, a dimer thereof and a trimer thereof.

3. The polyacetal resin composition according to claim 1 or claim 2, wherein the (D) compound is selected from the group consisting of 4,4'-methylenebis(phenylisocyanate), isophorone diisocyanate, 1,5-naphthalene diisocyanate, 1,6-hexamethylene diisocyanate, 2,4-tolylene diisocyanate, 2,6-tolylene diisocyanate, a dimer thereof and a trimer thereof.

4. The composition according to any one of claims 1 to 3, further containing 0.01 to 1 part by weight of (E) a metallic compound selected from the group consisting of a metal oxide, a metal hydroxide and an organic carboxylic acid metal salt, to 100 parts by weight of the (A) polyacetal copolymer.

5. The composition according to any one of claims 1 to 4, further containing 0.01 to 1 part by weight of (F) a fatty acid bisamide compound to 100 parts by weight of the (A) polyacetal copolymer.

6. A polyacetal resin molded article, prepared by molding the composition according to any one of claims 1 to 5.

## Patentansprüche

1. Polyacetalzusammensetzung, umfassend:
100 Gewichtsteile Polyacetal-Copolymer (A), das 1,0 mMol/kg oder weniger endständige Hemiformalgruppe, 0,5 mMol/kg oder weniger endständige Formylgruppe und 0,5 Gew.-% oder weniger instabile endständige Gruppe umfasst;
0,01 bis 3 Gewichtsteile gehindertes Antioxidans auf Phenolbasis (B);
0,05 bis 1 Gewichtsteil mindestens einer Verbindung (C), die ausgewählt ist aus der Gruppe bestehend aus Guanaminverbindungen und Triazinverbindungen; und
0,01 bis 1 Gewichtsteil Verbindung (D), die ausgewählt ist aus der Gruppe bestehend aus einer Isocyanatverbindung, einer Isothiocyanatverbindung und einer modifizierten Verbindung davon; wobei die Menge der instabilen endständigen Gruppe wie folgt bestimmt wird: ein Gramm Polyacetal-Copolymer wird zusammen mit 100 ml wässriger Lösung aus 50% (Volumen) Methanol, die 0,5 Vol.% Ammoniumhydroxid enthält, in einen druckbeständigen, geschlossenen Behälter gegeben; die Mischung wird 45 Minuten lang auf 180 °C erwärmt und dann abgekühlt; der Behälter wird geöffnet, und die Formaldehydmenge, die in der Lösung zersetzt und eluiert wurde, wird quantifiziert, um dadurch die Menge als Gewichtsprozent zur Menge an Polyacetal-Copolymer auszudrücken, wobei es sich um die Menge an der instabilen endständigen Gruppe handelt;
und mit der Maßgabe, dass die Zusammensetzung nicht sowohl 0,01 bis 5 Gewichtsteile an verwitterndem (leichtem) Stabilisator und 1 bis 50 Gewichtsteile eines Kern-Hülle-Polymers mit einem Kern aus gummiartigem Polymer und einer Hülle aus glasartigem Polymer, das aus Copolymer auf Vinylbasis besteht, aufweist.

2. Polyacetalharz-Zusammensetzung nach Anspruch 1, wobei die Verbindung (D) ausgewählt ist aus der Gruppe bestehend aus einer Diisocyanatverbindung, einer Diisothiocyanatverbindung, einem Dimer davon und einem Trimer davon.

3. Polyacetalharz-Zusammensetzung nach Anspruch 1 oder Anspruch 2, wobei die Verbindung (D) ausgewählt ist aus der Gruppe bestehend aus 4,4'-Methylenbis(phenylisocyanat), Isophorondiisocyanat, 1,5-Naphthalendiisocyanat, 1,6-Hexamethylendiisocyanat, 2,4-Tolylendiisocyanat, 2,6-Tolylendiisocyanat, einem Dimer davon und einem Trimer davon.

4. Zusammensetzung nach einem der Ansprüche 1 bis 3, ferner 0,01 bis 1 Gewichtsteil metallische Verbindung (E), die ausgewählt ist aus der Gruppe bestehend aus einem Metalloxid, einem Metallhydroxid und einem organischen Säuremetallsalz, auf 100 Gewichtsteile Polyacetal-Copolymer (A) umfassend.

5. Zusammensetzung nach einem der Ansprüche 1 bis 4, ferner 0,01 bis 1 Gewichtsteil Fettsäurebisamid-Verbindung (F) zu 100 Gewichtsteile Polyacetal-Copolymer (A) umfassend.

6. Formteil aus Polyacetalharz, hergestellt durch Formen der Zusammensetzung gemäß einem der Ansprüche 1 bis 5.

## Revendications

1. Composition de résine polyacétal comprenant :
100 parties en poids d'un copolymère de polyacétal (A) contenant 1,0 mmol/kg ou moins d'un groupe hémiformal terminal, 0,5 mmol/kg ou moins d'un groupe formyle terminal, et 0,5 % en poids ou moins d'un groupe instable terminal ;
0,01 à 3 parties en poids d'un antioxydant contenant du phénol encombré (B) ;
0,05 à 1 partie en poids d'au moins un composé (C) choisi dans le groupe constitué par les composés de guanamine et les composés de triazine ; et
0,01 à 1 partie en poids d'un composé (D) choisi dans le groupe constitué par un composé d'isocyanate, un composé d'isothiocyanate et un composé modifié à partir de celui-ci, dans lequel la quantité du groupe instable terminal est déterminée comme suit : un gramme de polyacétal copolymère est placé dans un récipient fermé résistant à la pression avec 100 ml de solution aqueuse de méthanol à 50 % (par volume) contenant 0,5 % en volume d'hydroxyde d'ammonium ; le mélange est chauffé à 180 °C pendant 45 minutes, puis refroidi ; le récipient est ouvert, et la quantité de formaldéhyde décomposé et élué dans la solution est quantifiée de façon à exprimer la quantité en pourcentage massique de la quantité de polyacétal copolymère, qui est la quantité du groupe instable terminal ;
et à condition que la composition ne comprenne pas à la fois 0,01 à 5 parties en poids d'un stabilisant aux intempéries (lumière) et 1 à 50 parties en poids d'un polymère de type noyau-enveloppe ayant un noyau de polymère caoutchouteux et une enveloppe d'un polymère vitreux constitué d'un copolymère vinylique.

2. Composition de résine de polyacétal selon la revendication 1, dans lequel le composé (D) est choisi dans le groupe constitué par un composé diisocyanate, un composé diisothiocyanate, un dimère de celui-ci et un trimère de celui-ci.

3. Composition de résine de polyacétal selon l'une quelconque des revendications 1 ou 2, dans lequel le composé (D) est choisi dans le groupe constitué par le 4,4'-méthylènebis (phénylisocyanate), le diisocyanate d'isophorone, le diisocyanate de 1,5-naphtylène, le 1,6-diisocyanate d'hexaméthylène, le diisocyanate de 2,4-tolylène, le diisocyanate de 2,6-tolylène, un dimère de celui-ci et un trimère de celui-ci.

4. Composition selon l'une quelconque des revendications 1 à 3, contenant en outre 0,01 à 1 partie en poids d'un composé métallique (E) choisi dans le groupe constitué par un oxyde métallique, un hydroxyde métallique et un composé d'un sel métallique d'un acide carboxylique organique, pour 100 parties en poids de polyacétal copolymère (A).

5. Composition selon l'une quelconque des revendications 1 à 4, contenant en outre 0,01 à 1 une partie en poids d'un composé (F) de bisamide d'acide gras à 100 parties en poids de polyacétal copolymère (A).

6. Article moulé en résine polyacétal, préparé par moulage de la composition selon l'une quelconque des revendications 1 à 5.
